# EUROPEAN PATENT APPLICATION

(11) **EP 4 012 883 A1**
(43) Date of publication of application: **15.06.2022**
(21) Application number: 20212732.0
(22) Date of filing: 09.12.2020
(51) Int. Cl.: H02J 15/00, B63B 3/38, B63H 7/02, B63H 9/04, B63H 21/17, F03D 9/00, F03D 13/25

(54) **FLOATING VESSEL AND METHOD FOR CONTROLLING THEREOF**

(71) Applicant: ABB Schweiz AG, 5400 Baden (CH)
(72) Inventor: Niemi, Erkki, 00380 Helsinki (FI)
(74) Representative: Kolster Oy Ab

(57) **Abstract**

A floating vessel comprising at least one wind turbine (110), and at least one first electric generator (120) operably coupled to the at least one wind turbine and configured to generate electric energy, at least one water turbine (210), and at least one second electric generator (220) operably coupled to the at least one water turbine and configured to generate electric energy, and an energy storage system (300) configured to receive and store energy generated by the at least one first electric generator (120) and by the at least one second electric generator (220).

## Description

### FIELD

The present invention relates to a floating vessel. More particularly the present invention relates to a floating vessel for producing energy. The present invention further relates to controlling a floating vessel.

### BACKGROUND

Renewable energy may be obtained from e.g. tidal waves and wind in offshore locations, or more generally in locations in a body of water, to produce e.g. electric energy.

Tidal energy from tides may be used for generating electricity by means of e.g. so-called tidal turbines. However, such tidal turbines may be positioned on the sea floor, for instance, which in turn may cause difficulties in maintenance thereof, for example, as the turbines may need to be lifted up for service and repair.

Offshore wind may be used for generating electricity by means of wind farms located in a body of water comprising fixed-foundation or floating wind turbines anchored on the sea floor, for instance. However, such offshore wind farm arrangements might be feasible only with relatively shallow water depths, e.g. due to anchoring or foundation costs, and relatively close to the shore such that the electricity produced can be delivered on shore.

### BRIEF DESCRIPTION

An object of the present invention is thus to provide an apparatus so as to overcome the above problems or at least to alleviate the above problems. The objects of the invention are achieved by a floating vessel, and a method for controlling a floating vessel, which are characterized by what is stated in the independent claims. The preferred embodiments of the invention are disclosed in the dependent claims.

The invention is based on the idea of providing a floating vessel with at least one wind turbine, and at least one first electric generator operably coupled to the at least one wind turbine and configured to generate electric energy, and at least one water turbine, and at least one second electric generator operably coupled to the at least one water turbine and configured to generate electric energy, and an energy storage system configured to receive and store energy generated by the at least one first electric generator and by the at least one second electric generator.

An advantage of the solution of the invention is that such a floating vessel is able to sail freely on a body of water and produce and store energy essentially regardless of the depth of the water and the distance to the shore. The at least one wind turbine can act as a sail and the at least one water turbine can act as a drogue, and both can produce energy. Moreover, an advantage of the solution of the invention is that such a floating vessel is able to sail to a location where there is a strong wind and is also able to avoid storms, for example.

### BRIEF DESCRIPTION OF THE DRAWINGS

In the following the invention will be described in greater detail by means of preferred embodiments with reference to the accompanying drawings, in which
Figure 1 shows an example of the floating vessel according to an embodiment;
Figure 2 shows an example of the floating vessel according to an embodiment;
Figure 3 shows an example of the floating vessel according to an embodiment; and
Figure 4 shows an exemplary block diagram according to an embodiment.

### DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or shape of the various elements, and generally their implementation, could vary from the examples shown in the figures.

According to an embodiment, a floating vessel comprises at least one wind turbine, and at least one first electric generator operably coupled to the at least one wind turbine and configured to generate electric energy, and at least one water turbine, and at least one second electric generator operably coupled to the at least one water turbine and configured to generate electric energy. Moreover, the floating vessel comprises an energy storage system configured to receive and store energy generated by the at least one first electric generator and by the at least one second electric generator. Herein term "vessel" may refer to a ship, a boat, a raft or generally a craft designed for water transportation in a sea, an ocean, a lake, a river, a channel, a canal, or any parts thereof, for example. Term "floating vessel" should be understood to encompass any such vessel capable of floating in a body of water including also a partly submersible floating vessel, for instance.

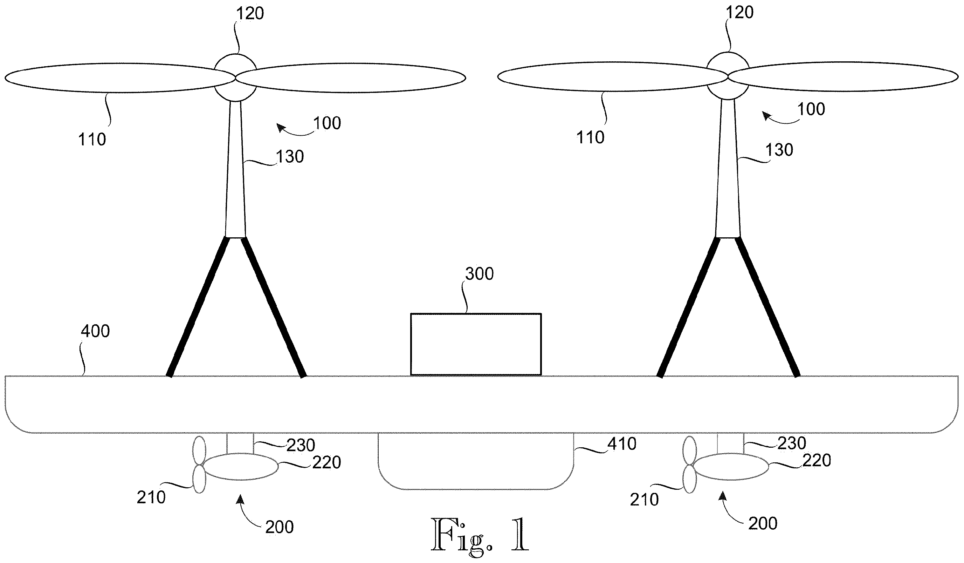

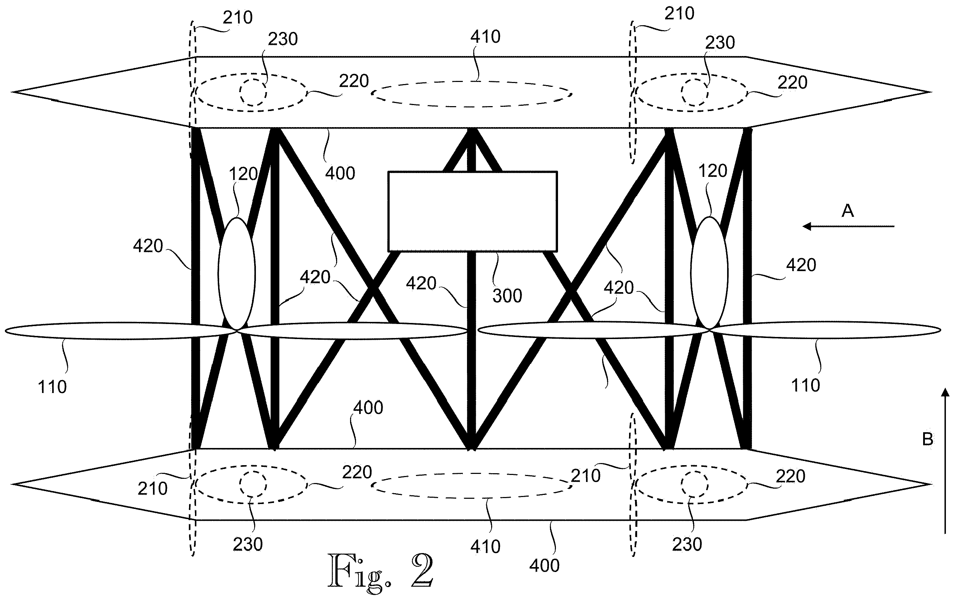

Figures 1 and 2 illustrate in a simplified manner an example of a floating vessel according to an embodiment. According to an embodiment, the vessel has at least one hull. According to an embodiment, the vessel is a multihull vessel comprising at least two hulls 400 as shown in the example. The number of hulls could be any number, such as two (a catamaran), three (a trimaran), four (a quadrimaran), five (a pentamaran) or more, for example. In such a multihull structure the hulls 400 may be connected by suitable connecting and supporting structures 420, which may include one or more decks, such as a bridge-deck, and/or other kinds of structures depending on the design of the vessel, for instance. According to an embodiment, at least one of the hulls 400 comprises at least one keel 410. In a multihull structure each of the hulls 400 may comprise at least one keel 410, for example.

The exemplary vessel of Figures 1 and 2 comprises two wind turbines 110. However, there could be any number of wind turbines 110 provided in the vessel. The at least one wind turbine 110 may be of any type, such as a horizontal-axis wind turbine, as illustrated, or a vertical-axis wind turbine, and may be of bladeless design or have one or more blades, for example. In the example, each of the wind turbines 110 is provided by a dedicated electric generator 120 operably coupled to the respective wind turbine 110 and configured to generate electric energy from the rotation of the wind turbine 110. In the example, the combination of the wind turbine 110 and the respective electric generator 120 operably coupled thereto thus forms a wind energy converter 100, which is able to convert the wind's kinetic energy into electric energy. It is also possible that two or more wind turbines 110 are coupled to at least one common electric generator 120, for instance. The at least one generator 120 may be of any type and may be a DC generator or an AC generator, such as a synchronous generator or an asynchronous generator (an induction generator), for example. Moreover, the at least one generator 120 may be a single-phase AC generator or a multi-phase AC generator with a plurality of phases such that the number of phases is e.g. 3 or greater than 3. The at least one generator 120 may further be of geared or gearless type, for example. There may further be one or more electric power converters (not shown separately in the figures) included in the at least one generator 120 and/or connected to an output of the at least one generator 120. According to an embodiment, the at least one wind turbine 110 may be rotatably connected to the hull 400 of the vessel and/or to the supporting structure 420 such that the at least one wind turbine 110 can be rotated at least horizontally with respect to the hull 400 of the vessel. In the exemplary vessel of Figures 1 and 2 this could be arranged by configuring a support mast 130 of the wind turbine 110 to be rotatable around its longitudinal axis or the wind energy converter unit 100 to be rotatable with respect to the mast 130, for example. The at least one wind turbine 110 could further be rotatably connected to the hull 400 of the vessel and/or to the supporting structure 420 such that a vertical angle of the at least one wind turbine 110 with respect to the hull 400 of the vessel can be adjusted, for instance. According to an embodiment, the electric generator(s) 120 of the at least one wind turbine 110 may be configured to be used as a motor(s) for generating thrust by the at least one wind turbine for moving the vessel. This would enable the movement of the vessel faster to a desired location when needed or when no sufficient wind is available, for example, and more generally, a more flexible manoeuvring of the vessel. Alternatively, there could be at least one separate motor (not shown) for generating thrust by the at least one wind turbine for moving the vessel.

The exemplary vessel of Figures 1 and 2 further comprises four water (hydro) turbines 210. However, the number of water turbines 210 provided in the vessel could vary and be e.g. at least 2, 3, 5 or another number depending on the design of the vessel, for instance. The at least one water turbine 210 may be of any type and e.g. the blade number and design thereof may vary. In the example, each of the water turbines 210 is provided by a dedicated electric generator 220 operably coupled to the respective water turbine 210 and configured to generate electric energy from the rotation of the water turbine 210. In the example, the combination of the water turbine 210 and the respective electric generator 220 operably coupled thereto thus forms a water energy converter 200, which is able to convert the kinetic energy of flowing water into electric energy. It is also possible that two or more water turbines 210 are coupled to at least one common electric generator 220, for instance. The at least one generator 220 may be of any type and may be a DC generator or an AC generator, such as a synchronous generator or an asynchronous generator (an induction generator), for example. Moreover, the at least one generator 220 may be a single-phase AC generator or a multi-phase AC generator with a plurality of phases such that the number of phases is e.g. 3 or greater than 3. The at least one generator 220 may further be of geared or gearless type, for example. There may further be one or more electric power converters (not shown separately in the figures) included in the at least one generator 220 and/or connected to an output of the at least one generator 220. According to an embodiment, the water turbines 210, or at least a part of them, may be rotatably connected to the hull 400 of the vessel and/or to a supporting structure 420 such that the water turbine 210 can be rotated at least horizontally with respect to the hull 400 of the vessel. In the exemplary vessel of Figures 1 and 2 the water energy converters 200 are realized as podded units, which are rotatably connected to the hull 400 of the vessel via a suitable support member 230. The support member 230 of the water turbine 210 may be configured to be rotatable around its longitudinal axis or the water energy converter unit 200 may be configured to be rotatable with respect to the support member 230, for example. According to an embodiment, the electric generator(s) 220 of the at least one water turbine 210 may be configured to be used as a motor(s) for generating thrust by the at least one water turbine for moving the vessel. This would enable the movement of the vessel faster to a desired location when needed or when no sufficient wind is available, for example, and more generally, a more flexible manoeuvring of the vessel. Alternatively, there could be at least one separate motor (not shown) for generating thrust by the at least one water turbine for moving the vessel.

According to an embodiment, the at least one water turbine 210 is positioned such that it acts as a drogue when the vessel is moving by thrust, i.e. a forward driving force, produced by wind and the at least one wind turbine 110 acting as a sail. Generally, the positioning of the water turbine(s) 210 may refer to the physical positioning of the water turbine(s) 210 in the vessel as well as the horizontal and/or vertical angle of water turbine(s) 210 with respect to the hull(s) 400 of the vessel, for example. In case there are more than one water turbine 210, they may be physically positioned e.g. symmetrically in the vessel such that they stabilize the vessel course when the vessel is moving straight ahead. According to an embodiment, the at least one water turbine 210 may be positioned such that it is at least partly or fully submerged in water when the vessel is floating in a body of water. According to an embodiment, the at least one water turbine 210 is positioned below the at least one hull 400 of the vessel in the normal operating position of the vessel. In the example of Figure 2, arrow A shows the possible (approximate) direction of movement of the vessel and arrow B shows the possible (approximate) direction of the wind in the exemplary configuration. Generally, the vessel may be configured to sail in downwind or sidewind position or any position therebetween. According to an embodiment, the direction of movement of the vessel A with respect to the direction of the wind B may be suitably adjusted e.g. by steering the vessel such that a desired speed and/or course of the vessel, and/or desired power of energy production is achieved. Additionally or alternatively, the horizontal angle and/or the vertical angle of the wind turbine(s) 110 and/or of the water turbine(s) 210 may be suitably adjusted such that a desired speed and/or course of the vessel, and/or desired power of energy production is achieved. According to an embodiment, blade angles of the wind turbine(s) 110 and/or of the water turbine(s) 210 may be arranged to be adjustable. Then, additionally or alternatively, the blade angles of the wind turbine(s) 110 and/or of the water turbine(s) 210 may be suitably adjusted such that a desired speed and/or course of the vessel, and/or desired power of energy production is achieved, for example. The vessel may further comprise at least one rudder (not shown in the figures) for steering the vessel.

According to an embodiment, controlling of the floating vessel may comprise steering the vessel by controlling the at least one water turbine and/or controlling the speed of the vessel by controlling the at least one water turbine 210 and/or the at least one wind turbine 110. According to an embodiment, the controlling of the at least one water turbine 210 may comprise adjusting a blade angle of at least one of the at least one water turbine and/or adjusting a direction of at least one of the at least one water turbine. Accordingly, the vessel can be steered and/or its speed can be controlled by suitably adjusting the blade angles of the water turbine(s) 210 and/or the direction(s) of the water turbine(s), i.e. the horizontal and/or vertical angle of the water turbine(s) 210 with respect to the hull(s) 400 of the vessel. As an example, if the at least one water turbine 210 can be rotated at least horizontally with respect to the hull(s) 400 of the vessel, then the vessel can be steered with just one such rotatable water turbine 210 by suitably rotating the water turbine with respect to the hull(s) 400 of the vessel. Moreover, if there are at least two water turbines 210 suitably physically positioned in the vessel, e.g. positioned separate from each other along a transverse direction of the vessel, the vessel can be steered by adjusting the blade angles of the at least two water turbines 210 relative to each other, for instance. The speed of the vessel can be controlled by controlling the drag produced by the at least one water turbine 210 by suitably adjusting the blade angle of the at least one water turbine 210, for example. According to an embodiment, the controlling of the at least one wind turbine 110 comprises adjusting a blade angle of at least one of the at least one wind turbine and/or adjusting a direction of at least one of the at least one wind turbine. Accordingly, the speed of the vessel can be controlled by suitably adjusting the blade angles of the wind turbines 110 and/or the directions of the wind turbines, i.e. the horizontal and/or vertical angle of the wind turbines 110 with respect to the hull(s) 400 of the vessel.

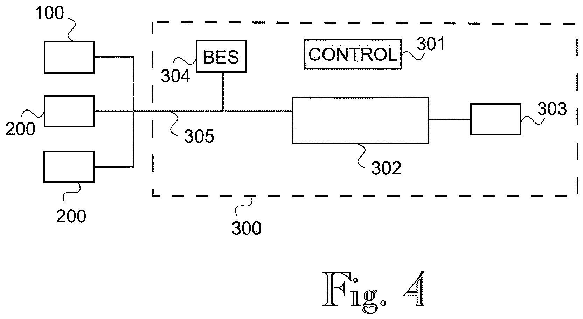

The exemplary vessel of Figures 1 and 2 further comprises an energy storage system 300 configured to receive and store energy produced by the electric generators 120, 220. The energy storage system 300 may consist of one or more physical units which may be enclosed in suitable housing(s), for example, and attached to the hull 400 of the vessel and/or to the supporting structure 420 thereof as shown in the example. Figure 4 shows an exemplary block diagram according to an embodiment in which an example of the energy storage system 300 is shown. In the example of Figure 4, one wind energy converter 100 and two water energy converters 200 are electrically connected to the system 300. However, the number of wind energy converters 100 and water energy converters 200 may vary from this example. The connection 305 may be an AC connection or a DC connection or a combination thereof, for example. The exemplary energy storage system 300 may comprise at least one battery energy storage, BES, 304 for directly storing electric energy. The BES 304 may comprise one or more battery modules or cells, for instance, and a suitable battery management system for managing the BES. The BES 304 may also be used for powering any equipment in the vessel. It should be noted that, apart from one physical unit, the term battery energy storage used herein can generally also refer to a logical unit comprised of two or more physical units, or parts thereof, linked together to operate as one unit.

According to an embodiment, the energy storage system 300 is configured to store energy by converting at least part of the received energy, e.g. at least part of the energy received from the electric generators 120, 220, into gas and storing the resulting gas. For the implementation, any suitable power-to-gas technology could be used, for example. According to an embodiment, the gas may be hydrogen. It is also possible to convert received electric energy into synthetic fuel, for example, i.e. generally any power-to-X technology may be utilized. Accordingly, the exemplary energy storage system 300 may additionally or alternatively comprise suitable conversion arrangement 302 configured to perform the conversion of electric energy into gas or synthetic fuel, and a storage 303 for storing the thus produced gas or fuel. The conversion arrangement 302 may be further configured to convert the gas or fuel back to electric energy for use in powering any equipment in the vessel, for example. As an example, the conversion arrangement 302 could be configured to produce hydrogen electrolytically through electrolysis of water by using the received electric energy. Alternatively or additionally, any suitable method for converting received energy, e.g. at least part of the energy received from the electric generators 120, 220, into gas, synthetic fuel or another form to be stored could be used. The hydrogen or other gas or fuel can be stored and transported ashore with a tanker or used as fuel by one or more other vessels, for example. The hydrogen or other gas or fuel can also be further processed to another gas, such as ammonia or to synthetic fuel, for instance.

The dimensioning of the vessel and the components thereof may depend on the desired system characteristics. As an example, the hull length of the vessel could be about 100-500 m, e.g. about 250 m. Then, the nominal power of the wind turbine generators 120 could be about 15 to 25 MW each, e.g. about 18 MW each, and the nominal power of the water turbine generators 220 could be about 1 to 5 MW each, e.g. about 2.5 MW. Consequently, the wind energy converter(s) 100 and the water energy converters 200 may generally be utility scale, i.e. megawatt-sized, converters.

Exemplary Figure 4 further shows a control arrangement 301, which may be part of the energy storage system 300 or a separate entity. The control arrangement 301 may comprise one or more physical units, for example. The control arrangement 301 may be configured to control the components of the energy storage system 300. Moreover, such a control arrangement 301 may be used for controlling and/or monitoring other components of the vessel, such as the at least one wind energy converter 100 and the at least one water energy converter 200, for example, and may be configured to perform one or more of the functionalities of any of the embodiments described herein. In addition, such a control arrangement 301 may be configured to navigate the vessel or at least assist in the navigation of the vessel. The vessel may be configured for autonomous, or unmanned operation, and/or be remotely controllable. The control arrangement 301 may comprise suitable functionality and equipment, such as communication equipment, for enabling such operation, for example.

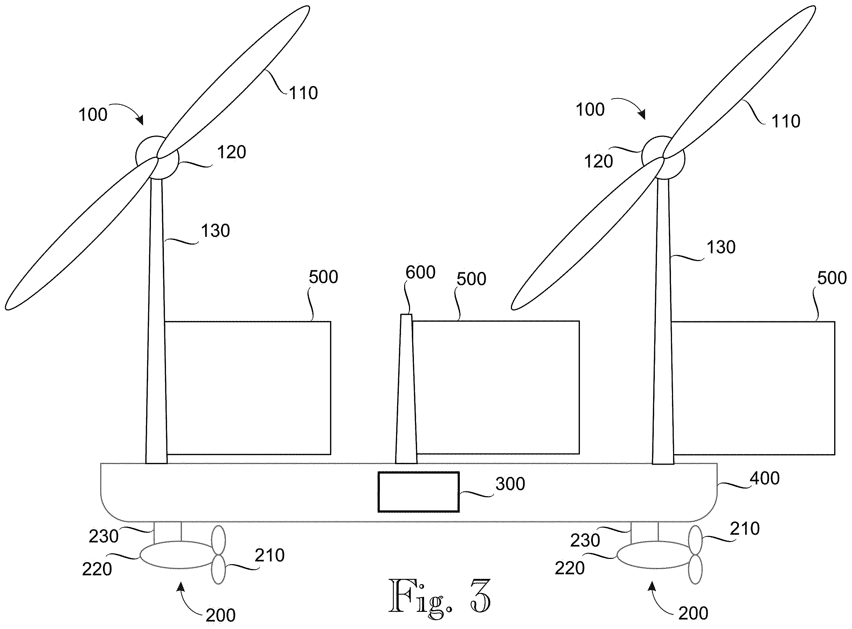

Figure 3 illustrates in a simplified manner another example of a floating vessel according to an embodiment. According to an embodiment, the vessel comprises at least one sail 500. According to an embodiment, at least one of the at least one sail 500 is supported by the mast 130 of the at least one wind turbine. Alternatively or additionally, the vessel may comprise one or more additional masts 600 for supporting one or more sails 500 as shown in the example. The sails 500 may be any kind of conventional sails. It is also possible that the vessel comprises at least one rotor sail. The sails 500 can be used for increasing speed or to be able to sail upwind, for example. By using sails 500 the vessel could normally sail side wind and because the sails could create the force to move the vessel, the wind turbine(s) 110 would see higher wind speed than the actual wind speed. The vessel could also sail at least slightly upwind by means of the sails 500, for instance.

The control arrangement 301 or other means controlling the energy storage system 300, or one or more components thereof, and/or any other components of the vessel according to any one of the embodiments herein, or a combination thereof, may be implemented as one physical unit or as two or more separate physical units that are configured to implement the functionality of the various embodiments. Herein the term 'unit' generally refers to a physical or logical entity, such as a physical device or a part thereof or a software routine. The control arrangement 301 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or other data. It is also possible to use a specific integrated circuit or circuits, or discrete electric components and devices for implementing the functionality according to any one of the embodiments.

Present energy storage systems and components thereof may comprise processors and memory that may be utilized in implementing the functionality according to the various embodiments described herein. Thus, at least some modifications and configurations required for implementing an embodiment in existing battery energy storage systems could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

## Claims

1. A floating vessel comprising:
at least one wind turbine (110), and at least one first electric generator (120) operably coupled to the at least one wind turbine and configured to generate electric energy;
at least one water turbine (210), and at least one second electric generator (220) operably coupled to the at least one water turbine and configured to generate electric energy; and
an energy storage system (300) configured to receive and store energy generated by the at least one first electric generator (120) and by the at least one second electric generator (220).

2. A vessel as claimed in claim 1, wherein the at least one water turbine (210) is positioned such that it acts as a drogue when the vessel is moving by thrust produced by wind and the at least one wind turbine (110) acting as a sail.

3. A vessel as claimed in claim 1 or 2, wherein the vessel comprises at least two water turbines (210).

4. A vessel as claimed in claim 1, 2 or 3, wherein the vessel is a multihull vessel comprising at least two hulls (400).

5. A vessel as claimed in any one of claims 1 to 4, wherein at least one of the hulls (400) comprises at least one keel (410).

6. A vessel as claimed in any one of claims 1 to 5, wherein the vessel comprises at least one sail (500).

7. A vessel as claimed in claim 6, wherein at least one of the at least one sail (500) is supported by a mast (130) of the at least one wind turbine.

8. A vessel as claimed in any one of claims 1 to 7, wherein the vessel comprises at least one rotor sail.

9. A vessel as claimed in any one of claims 1 to 8, wherein the energy storage system (300) is configured to store energy by converting at least part of the received energy into gas and storing the resulting gas.

10. A vessel as claimed in claim 9, wherein the gas is hydrogen.

11. A vessel as claimed in any one of claims 1 to 10, wherein the at least one first electric generator (120) is configured to be used as a motor for generating thrust by the at least one wind turbine (110) for moving the vessel, and/or wherein the at least one second electric generator (220) is configured to be used as a motor for generating thrust by the at least one water turbine (210) for moving the vessel.

12. A vessel as claimed in any one of claims 1 to 11, comprising control means configured to steer the vessel by controlling the at least one water turbine (210), and/or control a speed of the vessel by controlling the at least one water turbine (210) and/or the at least one wind turbine (110).

13. A method for controlling a floating vessel as claimed in any one of claims 1 to 12, comprising:
steering the vessel by controlling the at least one water turbine (210); and/or
controlling a speed of the vessel by controlling the at least one water turbine (210) and/or the at least one wind turbine (110).

14. A method as claimed in claim 13, wherein the controlling of the at least one water turbine (210) comprises adjusting a blade angle of at least one of the at least one water turbine and/or adjusting a direction of at least one of the at least one water turbine.

15. A method as claimed in claim 13 or 14, wherein the controlling of the at least one wind turbine (110) comprises adjusting a blade angle of at least one of the at least one wind turbine and/or adjusting a direction of at least one of the at least one wind turbine.
